# EUROPEAN PATENT APPLICATION

(11) **EP 3 637 830 A1**
(43) Date of publication of application: **15.04.2020**
(21) Application number: 18812626.2
(22) Date of filing: 04.06.2018
(51) Int. Cl.: H04W 24/02

(54) **GPP-BASED 5G TERMINAL COMMON PLATFORM OPTIMIZATION METHOD AND SYSTEM**

(30) Priority: 05.06.2017 CN 201710415240
(71) Applicant: JRD Communication (Shenzhen) Ltd, Shenzhen, Guangdong 518052 (CN)
(72) Inventor: TANG, Yanbo, Shenzhen, Guangdong 518052 (CN)
(74) Representative: Murgitroyd & Company
(86) International application number: PCT/CN2018/089837
(87) International publication number: WO 2018/223932

(57) **Abstract**

Disclosed is a GPP-based 5G terminal common platform optimization method. The method involves: allocating different priorities to programs of different modules in a base station, wherein a program related to a control channel and a control processing flow has the highest priority; processing a task with lower priority after the processing of a task with higher priority is complete; segmenting tasks into a plurality of sub-tasks according to an attribute of each of the tasks, and allocating the plurality of sub-tasks to different threads; and allocating a time budget to each of the sub-tasks, marking each of the sub-tasks with a time stamp in the processing flow, and deciding whether to continue execution or stop in advance according to a comparison result of the time stamp of each of the sub-tasks and the allocated time budget.

## Description

This application claims the benefit of priority of a China Patent Application No. 201710415240.1 submitted to State Intellectual Property Office of the P.R.C. on June 5, 2017, entitled "GPP-BASED 5G TERMINAL COMMON PLATFORM OPTIMIZATION METHOD AND SYSTEM", the contents of which are incorporated herein by reference in their entirety.

### TECHNICAL FIELD

The present invention relates to 5th-Generation (5G) technologies, and more particularly to a GPP (abbreviated from General Purpose Processor)-based 5G terminal common platform optimization method and system.

### DESCRIPTION OF RELATED ARTS

At present, global research on 5G technologies is in full swing, but 3GPP (abbreviated from Third Generation Partnership Project) standardization is still in progress. So far, there is no stereotype. Most manufacturers engaged in 5G research agree that in 2020 or so, 5G will gradually enter the commercial stage and enter people's lives across the world. Based on the uncertainty of 5G protocol, the design of software architecture for test terminals is challenged. Different from traditional systems based on FPGA (abbreviated from Field-Programmable Gate Array), a dedicated chip or DSP (abbreviated from Digital Signal Processor), open 5G wireless systems based on a pure software architecture implemented by general purpose processors can easily use various mature software engineering approaches to improve software development efficiency and software development quality. However, in software implementation, the open architecture based on open pure software also faces many problems such as real-time processing of LTE (abbreviated from Long Term Evolution) and 5G protocol stacks, HARQ (abbreviated from Hybrid Automatic Repeat request) feedback delay, and implementation of multi-terminal simulation. This brings a great deal of inconvenience.

### SUMMARY

### TECHNICAL PROBLEMS

The objective of the present invention is to provide a GPP(abbreviated from General Purpose Processor)-based 5G terminal common platform optimization method and system, for solving the problems of low real-time processing and high delay caused in the existing GPP-based 5G terminal common platforms.

### TECHNICAL SOLUTIONS

In a first aspect, the embodiments of the present invention provide a GPP-based 5G terminal common platform optimization method, which includes:
obtaining priority information of a plurality of programs in a station, wherein a control channel and the programs related to control processes have the highest priority;
performing tasks corresponding to the plurality of programs according to an order of the priorities from high to low;
dividing the task into a plurality of subtasks according to attributes of each of the tasks and assigning the plurality of subtasks to different threads; and
assigning time budget for each of the subtasks, marking each of the subtasks with a timestamp in a processing flow, and comparing the timestamp of each of the subtasks with the assigned time budget to determine whether to continue execution or terminate early.

In the GPP-based 5G terminal common platform optimization method, the GPP-based 5G terminal common platform supports both of static scheduling and dynamic scheduling.

In the GPP-based 5G terminal common platform optimization method, the step of dividing the task into a plurality of subtasks according to attributes of each of the tasks and assigning the plurality of subtasks to different threads includes: assigning priorities of the tasks and the threads.

In the GPP-based 5G terminal common platform optimization method, the step of dividing the task into a plurality of subtasks according to attributes of each of the tasks and assigning the plurality of subtasks to different threads includes: pre-processing the tasks in background threads.

In the GPP-based 5G terminal common platform optimization method, the step of assigning time budget for each of the subtasks, marking each of the subtasks with a timestamp in a processing flow, and comparing the timestamp of each of the subtasks with the assigned time budget to determine whether to continue execution or terminate early includes: monitoring execution of the tasks by a task controller, which interacts with a scheduler to increase or decrease the number of tasks processed at physical layer.

In the GPP-based 5G terminal common platform optimization method, an FPGA (abbreviated from Field-Programmable Gate Array)acceleration unit is adopted to build a heterogeneous computing platform, the FPGA accelerates the processing of baseband signals such that computational burden of a general purpose processor is reduced, DAM (abbreviated from Direct Memory Access) technologies are adopted to directly access a memory of general-purpose server platform via a PCI-E port for data reading and writing to achieve high-speed data interaction between the general purpose processor and the acceleration unit, SIMD (abbreviated from Single Instruction Multiple Data) instructions supported by the general-purpose processor are adopted to complete parallel processing of single-instruction multiple data streams, instruction set based software acceleration approaches include bit level acceleration, symbol level acceleration and/or sample level acceleration.

In a second aspect, the embodiments of the present invention provide a GPP-based 5G terminal common platform optimization method, which includes:
assigning different priorities for programs of different modules in a base station, wherein a control channel and programs related to control processes have the highest priority; performing low priority tasks after high priority tasks are completed;
dividing the task into a plurality of subtasks according to attributes of each of the tasks and assigning the plurality of subtasks to different threads; and
assigning time budget for each of the subtasks, marking each of the subtasks with a timestamp in a processing flow, and comparing the timestamp of each of the subtasks with the assigned time budget to determine whether to continue execution or terminate early.

In the GPP-based 5G terminal common platform optimization method, the GPP-based 5G terminal common platform supports both of static scheduling and dynamic scheduling.

In the GPP-based 5G terminal common platform optimization method, the step of dividing the task into a plurality of subtasks according to attributes of each of the tasks and assigning the plurality of subtasks to different threads includes:
assigning priorities of the tasks and the threads.

In the GPP-based 5G terminal common platform optimization method, the step of dividing the task into a plurality of subtasks according to attributes of each of the tasks and assigning the plurality of subtasks to different threads includes:
pre-processing the tasks in background threads.

In the GPP-based 5G terminal common platform optimization method, the step of assigning time budget for each of the subtasks, marking each of the subtasks with a timestamp in a processing flow, and comparing the timestamp of each of the subtasks with the assigned time budget to determine whether to continue execution or terminate early includes:
monitoring execution of the tasks by a task controller, which interacts with a scheduler to increase or decrease the number of tasks processed at physical layer.

In the GPP-based 5G terminal common platform optimization method, an FPGA (abbreviated from Field-Programmable Gate Array)acceleration unit is adopted to build a heterogeneous computing platform, the FPGA accelerates the processing of baseband signals such that computational burden of a general purpose processor is reduced, DAM (abbreviated from Direct Memory Access) technologies are adopted to directly access a memory of general-purpose server platform via a PCI-E port for data reading and writing to achieve high-speed data interaction between the general purpose processor and the acceleration unit, SIMD (abbreviated from Single Instruction Multiple Data) instructions supported by the general-purpose processor are adopted to complete parallel processing of single-instruction multiple data streams, instruction set based software acceleration approaches include bit level acceleration, symbol level acceleration and/or sample level acceleration.

A GPP-based 5G terminal common platform optimization system, includes:
a priority module configured to assign different priorities for programs of different modules in a base station, wherein a control channel and programs related to control processes have the highest priority, and perform tasks corresponding to the programs of different modules according to an order of the priorities from high to low;
a task dividing and assigning module configured to divide the task into a plurality of subtasks according to attributes of each of the tasks and assign the plurality of subtasks to different threads; and
a task performing module configured to assign time budget for each of the subtasks, mark each of the subtasks with a timestamp in a processing flow, and compare the timestamp of each of the subtasks with the assigned time budget to determine whether to continue the execution or terminate early.

The GPP-based 5G terminal common platform optimization system further includes:
a pre-processing module configured to pre-process the tasks in background threads.
The GPP-based 5G terminal common platform optimization system further includes:
a monitoring module configured to monitor execution of the tasks by a task controller, which interacts with a scheduler to increase or decrease the number of tasks processed at physical layer.

In the GPP-based 5G terminal common platform optimization system, an FPGA (abbreviated from Field-Programmable Gate Array)acceleration unit is adopted to build a heterogeneous computing platform, the FPGA accelerates the processing of baseband signals such that computational burden of a general purpose processor is reduced, DAM (abbreviated from Direct Memory Access) technologies are adopted to directly access a memory of general-purpose server platform via a PCI-E port for data reading and writing to achieve high-speed data interaction between the general purpose processor and the acceleration unit, SIMD (abbreviated from Single Instruction Multiple Data) instructions supported by the general-purpose processor are adopted to complete parallel processing of single-instruction multiple data streams, instruction set based software acceleration approaches include bit level acceleration, symbol level acceleration and/or sample level acceleration.

### BENEFICIAL EFFECTS

In the GPP-based 5G terminal common platform optimization method and system provided in the present invention, the real-time processing is pretty well, the HARQ feedback delay is low, and it meets the strict requirements of high real-time processing and low latency in mobile communication, which facilitates realization of multi-terminal simulation, greatly optimizes the existing common platforms, and brings a great of convenience.

### BRIEF DESCRIPTION OF THE DRAWINGS

FIG. 1 is a flowchart of a GPP-based 5G terminal common platform optimization method provided in the present invention.
FIG. 2 is a block diagram of a GPP-based 5G terminal common platform optimization system provided in the present invention.
FIG. 3 is a schematic diagram illustrating a GPP-based 5G terminal common platform optimization system provided in the present invention in simulating a large number of terminals.

### DETAILED DESCRIPTION

The present invention provides a GPP-based 5G terminal common platform optimization method and system. To make the objectives, technical schemes, and effects of the present invention more clear and specific, the present invention is described in further detail below with reference to the embodiments in accompanying with the appending drawings. It should be understood that the specific embodiments described herein are merely for interpreting the present invention and the present invention is not limited thereto.

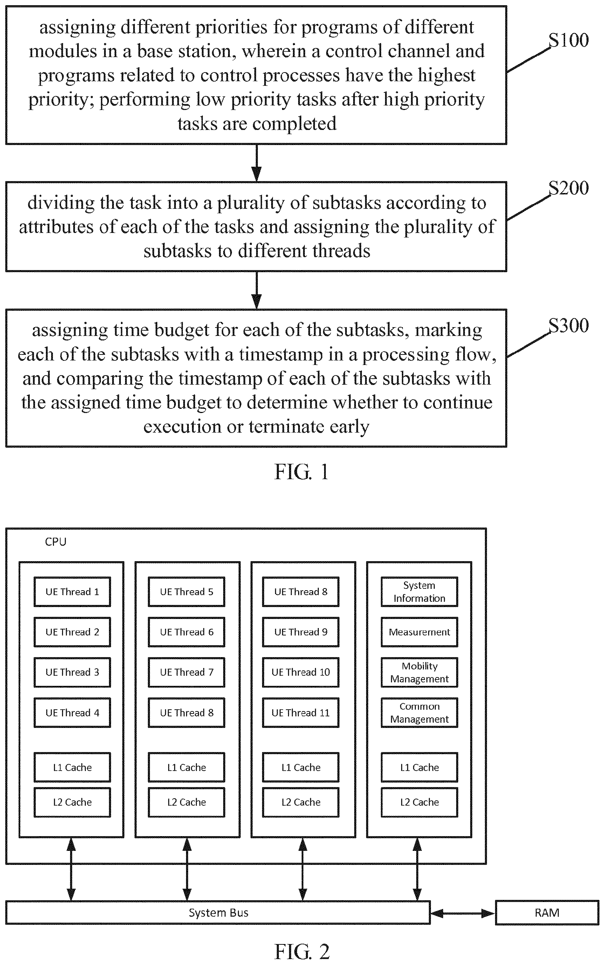

Referring to FIG. 1, the present invention provides a GPP-based 5G terminal common platform optimization method, which includes:
Step S100 - assigning different priorities for programs of different modules in a base station, wherein a control channel and programs related to control processes have the highest priority; performing tasks corresponding to the programs of different modules according to an order of the priorities from high to low, that is, low priority tasks are performed after high priority tasks are completed.

Step S200 - dividing the task into a plurality of subtasks according to attributes of each of the tasks and assigning the plurality of subtasks to different threads.

Step S300 - assigning time budget for each of the subtasks, marking each of the subtasks with a timestamp in a processing flow, and comparing the timestamp of each of the subtasks with the assigned time budget to determine whether to continue the execution or terminate early, that is, whether to continue the execution or terminate early is determined based on a result of the comparison between the timestamp of each of the subtasks with the assigned time budget.

Above steps will be described in detail below in accompanying with specific embodiments.

In Step S100, different priorities are assigned to the programs of different modules in the base station, and the control channel and the programs related to control processes have the highest priority. The tasks corresponding to the programs of different modules are performed according to the order of the priorities from high to low. Specifically, the present invention is a software optimization method based on GPP platforms. The software architecture for the base station based on Intel GPP framework is different from the traditional software architecture because of strict requirements of high real-time processing and low latency in mobile communication. For example, in the LTE standard, each subframe occupies 1 millisecond, which requires software programs at the base station to complete uplink channel decoding and transmission of ACK/NACK (acknowledgement/non-acknowledgement) to user equipments (UEs) within 3 milliseconds. In 5G NR (abbreviated from New Radio), the time occupied by each subframe is far less than 1 millisecond. A feedback in time in HARQ (a combination of forward error correction (FEC) coding and Automatic Repeat-reQuest (ARQ)) technology is more stringent than LTE requirements.

In addition, the base station based on Intel GPP framework differs from a traditional base station based on digital signal processors in software architecture. In implementing DSP-based radio software, the latency of digital signal processing is almost fixed, and thus the processing flow of programs can be strictly controlled. However, because of a multi-core and multi-thread framework of an operating system in an Intel-based terminal emulator, jitter may be experienced in execution of the programs when processing a same functional module. One solution is to bind specified tasks to a core and let the core execute fixed programs only.

How to take full advantage of multiple cores in a processor is a challenge to the design of software architecture for the base station based on Intel GPP framework. The software architecture has to include extensibility to support different types of processors and any number of cores. For example, after a terminal program is deployed, it may process traffic from one sector with a dual-core processor, or it may handle traffic from three sectors with a quad-core processor.

The design of the software architecture for the base station based on Intel GPP framework is ruled by maximizing the utilization of processing ability of the multi-core processor on a basis of meeting the real-time requirement of the protocol. To this end, different priorities are assigned to the programs of different modules in the base station. In order to ensure the communication protocol function normally, the control channel and the programs related to control processes must have the highest priority. On this basis, depending on processor capabilities, every effort is made to deal with the computations related to data channel. This means that either a dual-core processor or a quad-core processor can support the processing based on 20MHz TDD LTE protocol, but the quad-core processor can provide higher data throughput. For the sake of optimization, the GPP-based 5G terminal common platform preferably supports both of static scheduling and dynamic scheduling.

In Step S200, the task is divided into a plurality of subtasks according to attributes of each of the tasks and the plurality of subtasks are assigned to different threads. Specifically, for the purpose of optimization, when performing the tasks, the GPP-based 5G terminal common platform of the present invention can quickly and efficiently segment the tasks according to attributes of each of the tasks, and flexibly assign the tasks to different threads.

Preferably, Step S200 further includes a step of assigning priorities of the tasks and the threads (Step S201). Specifically, regarding priority assignment of the tasks and the threads, control channel processing programs need to be assigned with a higher priority, as described above. However, there are some tasks for which the real-time requirement is not strict. Thus, they can be assigned with a lower priority. Low priority tasks are performed after high priority tasks are completed. For example, a PRACH (abbreviated from Physical Random Access Channel) response can be processed in a long period of time.

In Step S300, time budget for each of the subtasks is assigned, each of the subtasks is marked with a timestamp in a processing flow, and the timestamp of each of the subtasks is compared with the assigned time budget to determine whether to continue the execution or terminate early. Specifically, in Step S200 the task is divided into the plurality of subtasks which are then assigned, and then the time budget for each of the subtasks is assigned and processing time for each of the subtasks is recorded in Step S300. Continue the execution if the processing time exceeds the time budget and terminate early if the processing time does not exceed the time budget. In practice, the task manager needs to assign the time budget to each of the subtasks. In the processing flow, the software will mark the subtask with a timestamp, which is compared to the time budget to determine whether to continue the execution or terminate early. The software will first process high priority tasks and then do its best to handle other tasks. For example, at the physical layer of a receiving end of LTE terminals, IFFT (abbreviated from Inverse Fast Fourier Transform) operations are first performed, decoding on control channel, PDCCH (abbreviated from Physical Downlink Control Channel), is then executed, and finally, data channel, PDSCH (Physical Downlink Shared Channel), is processed in the remaining time.

Preferably, Step S200 further includes:
Step S202 - pre-processing the tasks in background threads. Specifically, the tasks can be pre-processed in the background threads. Many tasks of a transmitting end can be calculated in advance. For example, reference signals of next 20 frames can be pre-calculated and then stored in a memory. In addition, the real-time requirement for transmission of new data in PDSCH channel is not very strict. Thus, modulation and coding can be completed in calculation and a scheduler decides when to transmit it. This pre-processing mechanism can reduce jitter and provide more space for the tasks with high priority or limited time.

Preferably, Step S300 further includes:
Step S301 - monitoring execution of the tasks by a task controller, which interacts with a scheduler to increase or decrease the number of tasks processed at physical layer. Specifically, the task controller will monitor execution of the tasks, and by interacting with the scheduler by data transmission, increase or decrease the number of tasks processed at the physical layer. For example, the scheduler will assign fewer tasks for future uplink processing when a large amount of tasks at the physical layer cannot be completed in the assigned time budget. Accordingly, throughput that can be supported by specific platforms depends on processor capabilities. In addition, the task controller also has to balance the loads between different cores. A mechanism is also needed to prevent jitter generated during the scheduling. This is the role of the smart scheduler and task controller of the general purpose processor platform of the present invention.

In practice, the GPP-based 5G terminal common platform of the present invention has a cross-layer design of the physical layer, MAC (Medium Access Control) layer and RLC (Radio Link Control) layer. The three layers are highly coupled in LTE protocol. Although they have a certain degree of independence from a functional point of view, they are coupled together from the perspective of task execution. In traditional implementation, independent hardware structures are used for different layers, and data transfer between the layers causes unnecessary delay and waste. Terminals based on Intel GPP framework can easily implement the cross-layer design because the entire protocol stack runs on one processor.

For the sake of optimization, the GPP-based 5G terminal common platform is preferable to use an FPGA acceleration unit to build a heterogeneous computing platform, in terms of hardware. The FPGA accelerates the processing of baseband signals such that computational burden of the general purpose processor is reduced. DAM (abbreviated from Direct Memory Access) technologies are adopted to directly access a memory of general-purpose server platform via a PCI-E port for data reading and writing to achieve high-speed data interaction between the general purpose processor and the acceleration unit. SIMD (abbreviated from Single Instruction Multiple Data) instructions supported by the general-purpose processor are adopted to complete parallel processing of single-instruction multiple data streams. Instruction set based software acceleration approaches include bit level acceleration, symbol level acceleration and/or sample level acceleration.

Specifically, in order to achieve the technical effects corresponding to the afore-described steps, an aspect for this is to adopt the FPGA acceleration unit to build the heterogeneous computing platform and use the FPGA to accelerate the processing of baseband signals, calculation on which is relatively simple but is heavy, thereby reducing computational burden of the general-purpose processor. With a design of PCI-E port, the DAM technologies are adopted to directly access the memory of general-purpose server platform for data reading and writing to achieve high-speed data interaction between the general purpose processor and the acceleration unit. Forward link RF (abbreviated from radio frequency) and a baseband processing interface of a general-purpose server are connected using a mature CPRI (abbreviated from Common Public Radio Interface) interface. The entire hardware architecture of a terminal emulator of the open 5G common platform is given, and functions (especially baseband processing function) of a software-defined physical layer are achieved. On the other hand, in combination with characteristics of Intel processor framework, the SIMD instructions (MMX, SSE, SSE2, SSE3, SSE4, AVX, AVX2, etc.) supported by the general-purpose processor are adopted to complete parallel processing of single-instruction multiple data streams. The instruction set based software acceleration approaches are illustrated below. 1) Bit level acceleration - bit level-Look UP Tables (LUT), wherein LUT is a compromised operation after considering computational complexity and spatial complexity, replacing conventional bit operations with LUT operations can greatly reduce on-line processing latency, the LUT approach can be used to accelerate bit-level operations such as CRC (abbreviated from Cyclic Redundancy Check) checking and de-verification, code scrambling and descrambling, rate matching and de-matching, and etc. 2) Symbol level acceleration - symbol level-single instruction multiple data, wherein Intel CPU has a dedicated SIMD instruction set to accelerate signal processing of symbol level operations. The SIMD is mainly used to perform the same operation repeatedly for symbol level data. In the SIMD, one instruction can handle several operations, the cost (used resource) of computation is low, bit bandwidth is fully utilized, and brings the benefit of significantly improving CPU efficiency. The SIMD approach is suitable for symbol level operations such as modulation and demodulation, precoding, MIMO (abbreviated from Multi-input Multi-output), and channel estimation. 3) Sample level acceleration - sample level-Intel IPP (abbreviated from Integrated Performance Primitives), wherein IPP developed by Intel is a cross-platform, cross-operating-system software function library that can implement operations such as signal processing, image processing, multimedia, vector processing, and etc. With IPP, there is no need to write assembly code, and a great change can be obtained by a small change of the code. By using IPP to realize FFT/IFFT operations, the test result shows that the performance is remarkable when on-line processing is completed by IPP. Preferably, FFT/IFFT operations can be accelerated by the IPP approach. The three acceleration approaches can be adopted separately or in combination.

FIG. 2 is a schematic diagram illustrating a GPP-based 5G terminal common platform optimization system provided in the present invention in simulating a large number of terminals. It is carried out by simulating a large number of terminals simultaneously on the common platform and based on a real-time operating system, Linux low latency version, that supports multi-threading technologies. FIG. 2 is directed to a software architecture for the common platform to simulate multiple terminals, which simplifies and modularizes (e.g., threads such as UE Thread 0, UE Thread 1, and etc.) the scheduling information that each TTI in the simulated terminals needs to process, to generate new threads for the execution, thereby ensuring efficiency and real-time response. For some public processing that requires cooperation with 5G system, such as system information, various measurement reports (Measurement nt), mobility management, etc., they (System Information, Measurement nt, Mobility Management, etc.) are executed on new threads in a manner that triggered by conditions. The design of the entire system separates real-time processing from conditional processing to ensure that each part of them can operate normally. As shown in FIG. 2, a system bus is provided in the GPP-based 5G terminal common platform optimization system provided in the present invention in simulating a large number of terminals. A large number of signaling interactions are generated during the simulated terminals start up and access the common platform. If all of the simulated terminals are running simultaneously, it will result in a signaling burst. The burst information may not be processed in time, and this may cause repetition of signaling. This will inevitably lead the system to a vicious circle. Therefore, it is necessary to control an operating sequence when accessed by the terminals. By communicating with the simulated terminals for thread arrangement, terminal accessing is done in order, the simulated terminals access one by one until all of the terminals are completed. The purpose of making multiple users simultaneously online is achieved. Then, according to the testing required by 5G network, the simulated terminals are indicated randomly or sequentially to report its own data.

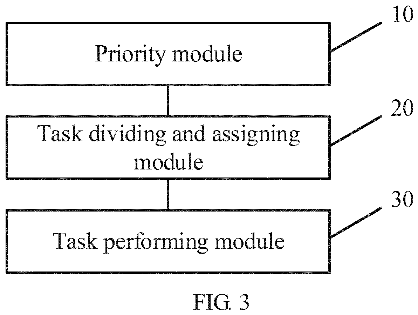

Based on the GPP-based 5G terminal common platform optimization method provided by the foregoing embodiments, the present invention further provides a GPP-based 5G terminal common platform optimization system. Referring to FIG. 3, the GPP-based 5G terminal common platform includes:
a priority module 10 configured to assign different priorities for programs of different modules in a base station, wherein a control channel and programs related to control processes have the highest priority, and perform tasks corresponding to the programs of different modules according to an order of the priorities from high to low, as described in Step S100.
a task dividing and assigning module 20 configured to divide the task into a plurality of subtasks according to attributes of each of the tasks and assign the plurality of subtasks to different threads, as described in Step S200.
a task performing module 30 configured to assign time budget for each of the subtasks, mark each of the subtasks with a timestamp in a processing flow, and compare the timestamp of each of the subtasks with the assigned time budget to determine whether to continue the execution or terminate early, as described in Step S300.

Further, the GPP-based 5G terminal common platform supports both of static scheduling and dynamic scheduling.

Further, the GPP-based 5G terminal common platform optimization system further includes:
a pre-processing module configured to pre-process the tasks in background threads.

Further, the GPP-based 5G terminal common platform optimization system further includes:
a monitoring module configured to monitor execution of the tasks by a task controller, which interacts with a scheduler to increase or decrease the number of tasks processed at physical layer.

Further, the priority module 10 is further configured to assign priorities of the tasks and the threads.

Further, the GPP-based 5G terminal common platform optimization system uses an FPGA acceleration unit to build a heterogeneous computing platform. The FPGA accelerates the processing of baseband signals such that computational burden of the general purpose processor is reduced. DAM technologies are adopted to directly access a memory of general-purpose server platform via a PCI-E port for data reading and writing to achieve high-speed data interaction between the general purpose processor and the acceleration unit. SIMD instructions supported by the general-purpose processor are adopted to complete parallel processing of single-instruction multiple data streams. Instruction set based software acceleration approaches include bit level acceleration, symbol level acceleration and/or sample level acceleration.

The principles and detailed technical features of the GPP-based 5G terminal common platform optimization system have been described detailedly in the embodiments of the GPP-based 5G terminal common platform optimization method, and thus are not repeated herein.

It is only be illustrated by taking the division of the above function module as an example, and in an actual application, the above-mentioned functions may be allocated to different function modules to be implemented according to a requirement, this is, dividing into different function modules to implement all of or a part of the functions described above.

A person of ordinary skill in the art can realize that part or whole of the steps in the methods according to the above embodiments may be implemented by instructing relevant hardware using computer (or mobile terminal) programs. The computer (or mobile terminal) programs may be stored in a computer (or mobile terminal) readable storage medium. The programs, when executing, may include various method flows according to the above embodiments. The storage medium may include a magnetic disk, an optical disc, a Read-Only Memory (ROM), a Random Access Memory (RAM), and etc.

Above all, in the GPP-based 5G terminal common platform optimization method and system provided in the present invention, different priorities are assigned for programs of different modules in a base station, wherein a control channel and programs related to control processes have the highest priority; tasks corresponding to the programs of different modules are performed according to an order of the priorities from high to low; the task is divided into a plurality of subtasks according to attributes of each of the tasks and the plurality of subtasks are assigned to different threads; time budget is assigned for each of the subtasks, each of the subtasks is marked with a timestamp in a processing flow, and the timestamp of each of the subtasks is compared with the assigned time budget to determine whether to continue the execution or terminate early. This solves many problems that are encountered in software implementation of the open architecture based on open pure software, such as real-time processing of LTE and 5G protocol stacks, HARQ feedback delay, and implementation of multi-terminal simulation. The real-time processing is pretty well. The HARQ feedback delay is low. It meets the strict requirements of high real-time processing and low latency in mobile communication, which facilitates realization of multi-terminal simulation, greatly optimizes the existing common platforms, and brings a great of convenience.

It should be understood that those of ordinary skill in the art may make equivalent modifications or variations according to the technical schemes and invention concepts of the present invention, but all such modifications and variations should be within the appended claims.

## Claims

1. A GPP(abbreviated from General Purpose Processor)-based 5G terminal common platform optimization method, comprising:
obtaining priority information of a plurality of programs in a station, wherein a control channel and the programs related to control processes have the highest priority;
performing tasks corresponding to the plurality of programs according to an order of the priorities from high to low;
dividing the task into a plurality of subtasks according to attributes of each of the tasks and assigning the plurality of subtasks to different threads; and
assigning time budget for each of the subtasks, marking each of the subtasks with a timestamp in a processing flow, and comparing the timestamp of each of the subtasks with the assigned time budget to determine whether to continue execution or terminate early.

2. The method according to claim 1, wherein the GPP-based 5G terminal common platform supports both of static scheduling and dynamic scheduling.

3. The method according to claim 1, wherein the step of dividing the task into a plurality of subtasks according to attributes of each of the tasks and assigning the plurality of subtasks to different threads comprises:
assigning priorities of the tasks and the threads.

4. The method according to claim 1, wherein the step of dividing the task into a plurality of subtasks according to attributes of each of the tasks and assigning the plurality of subtasks to different threads comprises:
pre-processing the tasks in background threads.

5. The method according to claim 1, wherein the step of assigning time budget for each of the subtasks, marking each of the subtasks with a timestamp in a processing flow, and comparing the timestamp of each of the subtasks with the assigned time budget to determine whether to continue execution or terminate early comprises:
monitoring execution of the tasks by a task controller, which interacts with a scheduler to increase or decrease the number of tasks processed at physical layer.

6. The method according to claim 1, wherein an FPGA (abbreviated from Field-Programmable Gate Array)acceleration unit is adopted to build a heterogeneous computing platform, the FPGA accelerates the processing of baseband signals such that computational burden of a general purpose processor is reduced, DAM (abbreviated from Direct Memory Access) technologies are adopted to directly access a memory of general-purpose server platform via a PCI-E port for data reading and writing to achieve high-speed data interaction between the general purpose processor and the acceleration unit, SIMD (abbreviated from Single Instruction Multiple Data) instructions supported by the general-purpose processor are adopted to complete parallel processing of single-instruction multiple data streams, instruction set based software acceleration approaches include bit level acceleration, symbol level acceleration and/or sample level acceleration.

7. A GPP(abbreviated from General Purpose Processor)-based 5G terminal common platform optimization method, comprising:
assigning different priorities for programs of different modules in a base station, wherein a control channel and programs related to control processes have the highest priority; performing low priority tasks after high priority tasks are completed;
dividing the task into a plurality of subtasks according to attributes of each of the tasks and assigning the plurality of subtasks to different threads; and
assigning time budget for each of the subtasks, marking each of the subtasks with a timestamp in a processing flow, and comparing the timestamp of each of the subtasks with the assigned time budget to determine whether to continue execution or terminate early.

8. The method according to claim 7, wherein the GPP-based 5G terminal common platform supports both of static scheduling and dynamic scheduling.

9. The method according to claim 7, wherein the step of dividing the task into a plurality of subtasks according to attributes of each of the tasks and assigning the plurality of subtasks to different threads comprises:
assigning priorities of the tasks and the threads.

10. The method according to claim 7, wherein the step of dividing the task into a plurality of subtasks according to attributes of each of the tasks and assigning the plurality of subtasks to different threads comprises:
pre-processing the tasks in background threads.

11. The method according to claim 7, wherein the step of assigning time budget for each of the subtasks, marking each of the subtasks with a timestamp in a processing flow, and comparing the timestamp of each of the subtasks with the assigned time budget to determine whether to continue execution or terminate early comprises:
monitoring execution of the tasks by a task controller, which interacts with a scheduler to increase or decrease the number of tasks processed at physical layer.

12. The method according to claim 7, wherein an FPGA (abbreviated from Field-Programmable Gate Array)acceleration unit is adopted to build a heterogeneous computing platform, the FPGA accelerates the processing of baseband signals such that computational burden of a general purpose processor is reduced, DAM (abbreviated from Direct Memory Access) technologies are adopted to directly access a memory of general-purpose server platform via a PCI-E port for data reading and writing to achieve high-speed data interaction between the general purpose processor and the acceleration unit, SIMD (abbreviated from Single Instruction Multiple Data) instructions supported by the general-purpose processor are adopted to complete parallel processing of single-instruction multiple data streams, instruction set based software acceleration approaches include bit level acceleration, symbol level acceleration and/or sample level acceleration.

13. A GPP(abbreviated from General Purpose Processor)-based 5G terminal common platform optimization system, comprising:
a priority module configured to assign different priorities for programs of different modules in a base station, wherein a control channel and programs related to control processes have the highest priority, and perform tasks corresponding to the programs of different modules according to an order of the priorities from high to low;
a task dividing and assigning module configured to divide the task into a plurality of subtasks according to attributes of each of the tasks and assign the plurality of subtasks to different threads; and
a task performing module configured to assign time budget for each of the subtasks, mark each of the subtasks with a timestamp in a processing flow, and compare the timestamp of each of the subtasks with the assigned time budget to determine whether to continue the execution or terminate early.

14. The system according to claim 13, further comprising:
a pre-processing module configured to pre-process the tasks in background threads.

15. The system according to claim 13, further comprising:
a monitoring module configured to monitor execution of the tasks by a task controller, which interacts with a scheduler to increase or decrease the number of tasks processed at physical layer.

16. The system according to claim 13, wherein an FPGA (abbreviated from Field-Programmable Gate Array)acceleration unit is adopted to build a heterogeneous computing platform, the FPGA accelerates the processing of baseband signals such that computational burden of a general purpose processor is reduced, DAM (abbreviated from Direct Memory Access) technologies are adopted to directly access a memory of general-purpose server platform via a PCI-E port for data reading and writing to achieve high-speed data interaction between the general purpose processor and the acceleration unit, SIMD (abbreviated from Single Instruction Multiple Data) instructions supported by the general-purpose processor are adopted to complete parallel processing of single-instruction multiple data streams, instruction set based software acceleration approaches include bit level acceleration, symbol level acceleration and/or sample level acceleration.
